**Europäisches Patentamt**

**European Patent Office**

**Office européen des brevets**

(19)

(11) Veröffentlichungsnummer: **0 231 150 B1**

(12) # EUROPÄISCHE PATENTSCHRIFT

(45) Veröffentlichungstag der Patentschrift:
**27.11.91 Patentblatt 91/48**

(51) Int. Cl.⁵: **C07C 69/003, C08G 63/82, C08G 63/83, C08K 5/524, C09F 1/04, C08G 63/48**

(21) Anmeldenummer: **87810037.9**

(22) Anmeldetag: **21.01.87**

(54) **Veresterungsverfahren mit Calcium-hydroxybenzylphosphonatkatalysator.**

(30) Priorität: **27.01.86 US 822437**

(43) Veröffentlichungstag der Anmeldung:
**05.08.87 Patentblatt 87/32**

(45) Bekanntmachung des Hinweises auf die
Patenterteilung:
**27.11.91 Patentblatt 91/48**

(84) Benannte Vertragsstaaten:
**DE FR GB IT**

(56) Entgegenhaltungen:
**DE-A- 2 916 941**
**US-A- 2 637 707**
**US-A- 3 310 575**
**US-A- 4 172 070**

(73) Patentinhaber: **CIBA-GEIGY AG**
**Klybeckstrasse 141**
**CH-4002 Basel (CH)**

(72) Erfinder: **Beuke, Donald**
**3702 Windy Haven Drive**
**Kingswood, TX 77339 (US)**

## Beschreibung

Es ist bekannt, dass man Veresterungsreaktionen in Gegenwart verschiedener Veresterungskatalysatoren durchführen kann. Dabei treten aber zahlreiche Schwierigkeiten bei Harzester-, Polyester- und polymeren Esterveresterungen auf, wenn Katalysatoren des Standes der Technik eingesetzt werden. Diese Schwierigkeiten lassen sich in zu lange Veresterungszeiten, schlechte Sauerstoffbeständigkeit und Verfärbung einteilen. Insbesondere sind die zur Vervollständigung der Veresterungsreaktion erforderlichen längeren Reaktionszeiten unwirtschaftlich und können, was noch bedeutsamer ist, zu einer Decarboxylierung der Säure führen, so dass Stellen für die Veresterungsreaktion aufgehoben werden. Man erhält dadurch unreine Produkte. Die Unbeständigkeit der erhaltenen Ester gegenüber Sauerstoff zeigt sich insbesondere zu Beginn der Lagerung, wo eine Tendenz zur Bildung von Hydroperoxyden und Peroxyden besteht, welche bei der späteren Anwendung die Verwendbarkeit der Ester stark einschränkt. Die Verwendung dieser Ester als Weichmacher in Polymeren und Klebrigmacher in Klebstoffen wird durch diese Unbeständigkeit fast unmöglich gemacht. Ausserdem wird das Anwendungsgebiet der so erhaltenen Ester durch die Bildung dunkler Verfärbungen wesentlich eingeschränkt.

Häufig verwendete saure und basische Veresterungskatalysatoren neigen dazu, die oben angegebenen Schwierigkeiten zu verstärken. Obwohl verschiedene Metallsalze wie Calciumformiat, Calciumstearat und Calciumacetat befriedigende katalytische Wirksamkeit zeigen, mangelt es ihnen an der antioxydativen oder verfärbungshemmenden Wirksamkeit. Dementsprechend ist ein späterer Zusatz von Antioxydantien und sonstigen Stabilisatoren unumgänglich, um bleibende Stabilität der Ester zu gewährleisten. Es sei auch auf U.S. Patent 4 172 070 verwiesen, wo Harzester in Gegenwart von Arylsulfonsäurekatalysatoren hergestellt werden. Dabei wird zwar verbesserte Veresterung und Stabilität angegeben, doch sind längere Reaktionszeiten, als erwünscht erforderlich, und zum Teil tritt eine Decarboxylierung auf. Die Decarboxylierung ist besonders dann ausgeprägt, wenn die Säure zu Beginn oder in einem frühen Stadium der Veresterungsreaktion zugesetzt wird. Die Decarboxylierung führt zur Bildung niedermolekularer Stoffe, die notwendigerweise entfernt werden müssen, um Ester mit entsprechenden physikalischen Eigenschaften, wie Erweichungspunkten, zu erhalten. Ferner muss die Sulfonsäure aus dem Polyester ausgewaschen werden, um reinere Produkte zu erhalten; auch die eventuelle Notwendigkeit der späteren Zugabe von Antioxydantien muss in Betracht gezogen werden, im Hinblick auf die verbleibende Tendenz Hydroperoxyden oder Peroxyden während der Verarbeitung und Lagerung zu bilden.

Es ist deshalb die Hauptaufgabe dieser Erfindung, einen Veresterungskatalysator zur Verfügung zu stellen, der die Reaktionszeit der Veresterung erheblich verkürzt und damit die mit den längeren Umsetzungen verbundenen Probleme weitgehend ausschaltet sowie die Herstellung reiner, vollständig veresterter Produkte mit Sauerstoffbeständigkeit und verringerter Verfärbung erleichtert.

Weitere Aufgaben und Vorteile dieser Erfindung sind aus der nachfolgenden Beschreibung ersichtlich.

Ueberraschenderweise wurde nun gefunden, dass die Verwendung von Calcium-bis-[monoethyl-(3,5-di-t-butyl-4-hydroxybenzyl)-phosphonat] als Veresterungskatalysator für Harzester die Reaktionszeiten für die Veresterung wesentlich verkürzt und Ester mit erheblich verbesserten Eigenschaften liefert. Die Gesamtreaktion kann somit in ungefähr 7 Stunden zu Ende geführt werden, im Gegensatz zu den 10 - 14 Stunden, die bei den bestehenden Methoden zur Herstellung von Estern mit vergleichbaren Säurezahlen angewandt werden. Die Reaktionsbedingungen ergeben nur ein Mindestmass an Decarboxylierung und führen zu wesentlich reineren Produkten. Die Notwendigkeit für spezielle Reinigungsstufen entfällt dadurch bei weitem. Es werden Ester mit den erwünschten Erweichungspunkten erhalten. Aehnliche Vorteile ergeben sich in der Herstellung anderer Polyester. Der Phosphonat-Katalysator liefert ferner Ester mit ausgezeichneten antioxidativen Eigenschaften. Entsprechend ist kein Zusatz von Stabilisatoren nach der Veresterung erforderlich. Diese Eigenschaften werden durch die Abwesenheit von Hydroperoxyd- und Peroxydgruppen während der Lagerung sowie durch die Langzeitstabilität der Polyester und polyesterhaltigen Formulierungen offensichtlich. Die Verfärbung der Polyester und der daraus erhaltenen Produkten ist ebenfalls verringert. So werden Ester mit guter Stabilität gegenüber Sauerstoff und Verfärbung sowie in hoher Reinheit hergestellt.

Gegenstand vorliegender Erfindung ist daher ein verbessertes Veresterungsverfahren, bei dem man eine aliphatische oder aromatische Carbonsäure bzw. deren Anhydrid mit einer äquivalenten Menge oder einem höchstens 30%igen Ueberschuss eines Alkohols bei erhöhten Temperaturen in Gegenwart eines Katalysators genügend lange reagieren lässt, um einen Ester mit einer Säurezahl von höchstens 15 zu halten, dadurch gekennzeichnet, dass man diese Umsetzung in Gegenwart von etwa 0,05 bis 10,0 Gewichtsprozent Calcium-bis-[monoethyl-(3,5-di-t-butyl-4-hydroxybenzyl)-phosphonat] als Katalysator durchführt.

Das erfindungsgemässe Verfahren kann dadurch ausgeführt werden, dass man aliphatische oder aromatische Carbonsäuren bei Temperaturen im Bereich von etwa 150 bis 300°C mit geeigneten Alkoholen umsetzt. Zu den typischen aliphatischen Säuren zählen $C_1$-$C_{18}$-Monocarbonsäuren wie Buttersäure, Capronsäure, Laurinsäure, Myristinsäure, Palmitinsäure, Stearinsäure, Oelsäure, Linolsäure und Linolensäure, $C_2$-$C_{18}$-Dicarbonsäuren wie Bernsteinsäure, Glutarsäure, Adipinsäure, Azelainsäure, Sebacinsäure und Maleinsäure, Tricarbonsäuren wie Zitronensäure sowie Harzsäuren (Abietinsäure- und Pimarsäuretypen). Zu aromatischen Mono-, Di- und Tricarbonsäuren gehören Benzoesäure, Phthalsäure, Isophthalsäure, Terephthalsäure, Methoxybenzoesäure, Naphthoesäure, Zimtsäure und Trimellithsäure, sowie Aralkyl- und Alkarylcarbonsäuren und Anhydride wie Phthalsäureanhydrid und Trimellithsäureanhydrid. Bevorzugt sind aliphatische $C_1$-$C_{18}$-Monocarbonsäuren, aliphatische $C_2$-$C_{18}$-Dicarbonsäuren aliphatische Tricarbonsäuren, aromatische Mono-, Di- oder Tricarbonsäuren oder Harzsäure, und insbesondere Harzsäure.

Zu den typischen Alkoholen zählen einwertige $C_1$-$C_{18}$-Alkohole wie Ethanol, Butanol, Octanol, Dodecanol und Stearylalkohol, $C_2$-$C_{18}$-Diole wie Ethylenglykol, Propandiol, Butandiol, Butylendiol und Hexandiol sowie mehrwertige Alkohole wie Glycerin, Pentaerythrit, Dipentaerythrit, Tripentaerythrit, Trimethylolethan und Trimethylolpropan.

Bevorzugt als Alkohol sind einwertige $C_1$-$C_{18}$-Alkohole, $C_2$-$C_{18}$-Diole oder mehrwertige Alkohole, und insbesondere Pentaerythrit.

Es werden stöchiometrische Mengen Säure und Alkohol eingesetzt, wobei es bei einem mehrwertigen Alkohol möglich ist, einen bis zu etwa 30%igen Ueberschuss Alkohol über das Aequivalent zu verwenden, wobei ein 5-30%iger Ueberschuss besonders geeignet ist.

Bevorzugt ist ein Verfahren der Erfindung, das dadurch gekennzeichnet ist, dass man eine Harzsäure mit einem 5-30%igen Ueberschuss an Pentaerythrit, bezogen auf äquivalente Mengen, in Gegenwart von 0,5 Gew.-% des Phosphonats umsetzt.

Wie bereits beschrieben, ist die Erfindung besonders nützlich zur Herstellung von Di-, Tri- oder Tetraestern sowie Polyester, wie Polyethylen-terephthalat.

Das Calcium-bis-[monoethyl-(3,5-di-butyl-4-hydroxy-benzyl)-phosphonat] fällt unter die Offenbarung des U.S. Patents 3 310 575. Präparative Methoden und Anwendungsgebiete sind dort angegeben. Das Phosphonat ist im Handel erhältlich. Der Katalysator wird in Konzentrationen von etwa 0,05 bis 10,0 % auf das kombinierte Gewicht von Säure und Alkohol eingesetzt, vorzugsweise etwa 0,2 bis 0,6 % und be sonders bevorzugt etwa 0,5 %.

Das erfindungsgemässe Verfahren kann vorzugsweise so ausgeführt werden, dass man den Phosphonat-Katalysator den Säure- und Alkoholreaktanden vor Beginn der Veresterungsreaktion zusetzt. Das Phosphonat kann man aber auch vor dem Einleiten der Veresterungsreaktion oder zu einem bestimmten Zeitpunkt während der Reaktion zusetzen, wenn die ursprüngliche Säurezahl um etwa 10 bis 67 % abgenommen hat. Vervollständigung der Reaktion wird durch Verfolgen der Säurezahl bestimmt, wobei Ester mit einer Säurezahl unter etwa 15 im allgemeinen erwünscht sind. Das erfindungsgemässe Verfahren erfordert im allgemeinen nicht mehr als 7 Stunden zur Herstellung der gewünschten Ester. Die so erhaltenen Ester zeigen gute Farbe und gute Oxydationsbeständigkeit bei der Lagerung und in formulierten Produkten.

Bevorzugt sind Ester, die man dadurch erhält, dass man nach dem erfindungsgemässen Verfahren eine Harzsäure mit einem 5-30%igen Ueberschuss an Pentaerythrit, bezogen auf äquivalente Mengen, in Gegenwart von 0,5 Gew.-% Phosphonats, umsetzt.

Das nachfolgende Beispiel dient der Erläuterung von Ausführungsformen der vorliegenden Erfindung. Dabei sind Teile und Prozentangaben stets Gewichtsteile und Gewichtsprozente, falls nicht anders angegeben.

Beispiel

Ein Reaktionsgefäss wird mit 500 g S-Harz (Säurezahl 179), 71,1 g Pentaerythrit (30 % stöchiometrischer Überschuss), 2,5 g Calcium-bis-[monoäthyl-(3,5-di-tert.- butyl-4-hydroxybenzyl)-phosphonat] und 25 g Xylol beschickt und rasch auf 275°C erhitzt. Unter fortgesetztem Erhitzen bei 275°C bestimmt man von Zeit zu Zeit die Säurezahlen. Das Erhitzen wird abgebrochen, wenn eine Säurezahl von 15 oder weniger erreicht ist und der Erweichungspunkt (nach der Ring-und-Kugelmethode gemäss ASTM E28-67 bestimmt) im Bereich 90-99°C liegt. Dieser Erweichungspunkt lässt sich durch fortgesetztes Erhitzen in stärkerem Stickstoffstrom zur Entfernung von Verunreinigungen erhöhen.

Die Arbeitsweise wird achtmal genau gleich wiederholt, und die Veresterung ist dabei jedes Mal nach 6-7 Stunden Reaktionszeit vollständig. Dies bedeutet eine sehr erwünschte Verkürzung der Veresterungszeit um 30% gegenüber den derzeit angewandten Methoden des Standes der Technik. Ausserdem erhält man Ester mit geringer Färbung.

Die Sauerstoffbeständigkeit des Esters wird durch Vermahlen des Produkts auf Siebgrösse 40 [40 mesh] und Ermittlung der Hydroperoxydzahlen durch jodometrische Titration bestimmt. Da ein höherer Gehalt an Hydroperoxyden auf geringere Sauerstoffbeständigkeit hinweist, sind niedrigere Hydroperoxydzahlen erwünscht. Der oben hergestellte Ester besass nach 24 Stunden Lagerung bei 23°C eine Hydroperoxydzahl von 116 ppm. Dagegen zeigte ein handelsüblicher Harzester (Zonester 100 von Arizona Chemical) nach 24 Stunden eine Peroxydzahl von 230 ppm. Die 50%ige Annahme ist somit ein Hinweis auf die Lager- und Sauerstoffbeständigkeit der nach dem vorliegenden Verfahren hergestellten Ester.

Zusammenfassend ist es ersichtlich, dass diese Erfindung ein verbessertes Veresterungsverfahren bereitstellt. Dabei sind Abänderungen in den Anteilen, Arbeitweisen und Stoffen möglich, ohne vom durch die nachfolgenden Ansprüche definierten Schutzumfang der Erfindung abzuweichen.

## Patentansprüche

1. Verbessertes Veresterungsverfahren, bei dem man eine aliphatische oder aromatische Carbonsäure bzw. deren Anhydrid mit einer äquivalenten Menge oder einem höchstens 30%igen Überschuss eines Alkohols bei erhöhten Temperaturen in Gegenwart eines Katalysators genügend lange reagieren lässt, um einen Ester mit einer Säurezahl von höchstens 15 zu erhalten, dadurch gekennzeichnet, dass man diese Umsetzung in Gegenwart von etwa 0,05 bis 10,0 Gewichtsprozent Calcium-bis-[monoethyl-(3,5-di-butyl-4-hydroxybenzyl)-phosphonat] als Katalysator durchführt.

2. Verfahren nach Anspruch 1, dadurch gekennzeichnet, dass als Carnonsäure eine aliphatische $C_1$-$C_{18}$-Monocarbonsäure, aliphatische $C_2$-$C_{18}$-Dicarbonsäure, aliphatische Tricarbonsäure, aromatische Mono-, Di- oder Tricarbonsäure oder Harzsäure eingesetzt wird.

3. Verfahren nach Anspruch 2, dadurch gekennzeichnet, dass die Carbonsäure eine Harzsäure ist.

4. Verfahren nach Anspruch 1, dadurch gekennzeichnet, dass als Alkohol ein einwertiger $C_1$-$C_{18}$-Alkohol, ein $C_2$-$C_{18}$-Diol oder ein mehrwertiger Alkohol eingesetzt wird.

5. Verfahren nach Anspruch 4, dadurch gekennzeichnet, dass der Alkohol Pentaerythrit ist.

6. Verfahren nach Anspruch 1, dadurch gekennzeichnet, dass man den Phosphonat-Katalysator den Säure- und Alkoholreaktanden vor Beginn der Veresterungsreaktion zusetzt.

7. Verfahren nach Anspruch 1, dadurch gekennzeichnet, dass man eine Harzsäure mit einem 5–30%igen Ueberschuss an Pentaerythrit, bezogen auf äquivalente Mengen, in Gegenwart von 0,5 Gew.-% des Phosphonats umsetzt.

## Claims

1. An improved esterification process wherein an aliphatic or aromatic carboxylic acid or its anhydride is reacted with an equivalent amount or a 30% maximum excess of an alcohol at elevated temperatures in the presence of a catalyst for a period of time sufficient to obtain an ester having a maximum acid number of 15, comprising conducting said reaction in the presence of from about 0.05-10.0% by weight of calcium bis[monoethyl(3,5-dibutyl-4-hydroxybenzyl)phosphonate] as the catalyst.

2. A process according to claim 1, wherein the carboxylic acid is an aliphatic $C_1$-$C_{18}$ monocarboxylic acid, aliphatic $C_2$-$C_{18}$ dicarboxylic acid, aliphatic tricarboxylic acid, aromatic mono-, di- or tri-carboxylic acid or rosin acid

3. A process according to claim 2, wherein the carboxylic acid is a rosin acid

4. A process according to claim 1, wherein the alcohol is a $C_1$-$C_{18}$ monohydric alcohol, $C_2$-$C_{18}$ diol or polyhydric alcohol.

5. A process according to claim 4, wherein the alcohol is pentaerythritol.

6. A process according to claim 1, wherein the phosphonate catalyst is added to the acid and alcohol reactants prior to the commencement of the esterification reaction.

7. A process according to claim 1, wherein a rosin acid is reacted with a 5-30°% excess of pentaerythritol, based on the equivalent amount, in the presence of 0.5% by weight of the phosphonate.

## Revendications

1. Procédé d'estérification perfectionné dans lequel on fait réagir à chaud en présence d'un catalyseur un acide carboxylique aliphatique ou aromatique ou son anhydride avec une proportion équivalente ou un excès d'au maximum 30% d'un alcool pendant une durée suffisante pour obtenir un ester ayant un indice d'acide d'au maximum 15, procédé caractérisé en ce que l'on effectue cette réaction en présence, comme catalyseur, d'environ 0,05 à 10% en poids de bis[monoéthyl-(3,5-di-t-butyl-4-hydroxybenzyl)-phosphonate] de calcium.

2. Procédé selon la revendication 1, caractérisé en ce que l'acide est un acide aliphatique monocarboxylique en $C_1$-$C_{18}$, dicarboxylique en $C_2$-$C_{18}$ ou tricarboxylique, un acide aromatique mono-, di- ou tricarboxylique ou un acide résinique.

3. Procédé selon la revendication 2, caractérisé en ce que l'acide carboxylique est un acide résinique.

4. Procédé selon la revendication 1, caractérisé en ce que l'alcool est un monoalcool en $C_1$-$C_{18}$, un diol en $C_2$-$C_{18}$ ou un polyol.

5. Procédé selon la revendication 4, caractérisé en ce que l'alcool est le pentaérythritol.

6. Procédé selon la revendication 1, caractérisé en ce que l'on ajoute le phosphonate catalyseur à l'acide et à l'alcool avant le début de la réaction d'estérification.

7. Procédé selon la revendication 1, caractérisé en ce que l'on fait réagir un acide résinique avec un excès de 5 à 30% de pentaérythritol par rapport à la proportion stoechiométrique, en présence de 0,5% en poids du phosphonate.